# EUROPEAN PATENT SPECIFICATION

(11) **EP 1 566 022 B1**
(45) Date of publication and mention of the grant of the patent: **31.05.2006**
(21) Application number: 03773892.9
(22) Date of filing: 25.11.2003
(51) Int. Cl.: H04L 12/403, B60R 16/02, H04L 29/12

(54) **AUTO-CONFIGURED LIN BUS NODES**
AUTOMATISCH KONFIGURIERTE LIN BUS KNOTEN
NOEUDS DE BUS LIN A AUTO-CONFIGURATION

(30) Priority: 26.11.2002 GB 0227526
(43) Date of publication of application: 24.08.2005
(73) Proprietor: Melexis NV, 8900 Ieper (BE)
(72) Inventor: VANDERHENST, Henri, 8900 Ieper (BE)
(74) Representative: Hill, Richard
(86) International application number: PCT/IB2003/005390
(87) International publication number: WO 2004/049642

(56) References cited:
- EP-A- 0 893 767
- WO-A-02/37923
- GB-A- 2 353 448
- US-A- 4 847 834
- US-B1- 6 397 280

## Description

The invention relates to electronic devices and more specifically to electronic devices used within systems conforming to the LIN Bus standard.

LIN Bus is a name given to an open protocol defined for use in communicating between a number of distributed modules. Many applications of the LIN Bus are targeted specifically at the automotive industry.

In LIN Bus applications each module contains an interface circuit, usually implemented as a single integrated circuit, which interfaces to the common signal conductor or BUS and handles the protocols associated with the messages and the required responses.

Each module in a system has a unique identity, ID, within the system, which enables a bus master to communicate with a selected module or a group of modules within the system.

As originally defined, all the modules within a LIN Bus system are connected in parallel. That is they share a BUS across which all messages and communications are sent and received. Each module has a pull up resistor and an active pull down transistor. Message initiation is asynchronous and message collisions are resolved by arbitration means. Since a pull down or active state, will take precedence over a pull up, or recessive state, any transmitting module seeing an active state when transmitting a recessive state knows that another module is transmitting. Under such circumstances the module transmitting the active state takes precedence and any other modules must cede the bus and try again later.

Each module is assumed to be preconfigured before installation with its own unique ID.

Such an assumption places demands on the manufacturers, installers and most particularly on those repairing a system to correctly configure every module before installation. An extension to the system protocol providing a method of configuring a module with an ID after installation was thereby proposed and implemented by Bosch and Philips amongst others and has been favorably received.

In such a system the electronic interface between the BUS and the modules is altered. In particular, the system incorporates extended capability modules capable of being configured wherein each extended capability module has two connections to the BUS, the normal modules having only one connection to the BUS.

The BUS is made discontinuous at each extended capability module and one connection is made to each side of the discontinuity. Extended capability modules are thus connected in a daisy chain configuration whilst normal modules are connected to the BUS as before. The extended capability modules maintain signal continuity along the BUS but introduce a nominal (approximately one ohm) series resistance per extended capability module.

Extended capability modules are manufactured in a non configured state but can be configured after installation. In a non configured state a module has no identification (ID) and cannot be selectively communicated with. To overcome this limitation, all un-configured extended capability modules respond to a configuration request message transmitted onto the BUS by a bus master, by turning off their pull down transistors and forcing a current through their pull up transistor onto the common signal conductor. These forced currents will flow along the common signal conductor to the bus master which has its pull down transistor turned on. By this means every un-configured extended capability module except one will see a voltage across the nominal one ohm series resistance introduced at each extended capability module. The exception is the module furthest from the master as defined by the daisy chaining connections. This un-configured extended capability module is thus uniquely identified and enables itself for programming of an ID within the system. The procedure can be repeated until all un-configured extended capability modules are configured with an ID.

This scheme has a number of limitations. The normal performance of the bus is degraded by the introduction of the series resistances. The series resistance within an extended capability module is normally implemented within an integrated circuit and the tolerance of such resistors is wide. The forced currents are all sunk via the bus master, which has maximum current capabilities and a current limiting capability defined within the specification. The value of the forced current used to identify and enable one module for configuration must be small and carefully selected and controlled. The voltages developed across the series reset or within a module are also small and must be measured with high accuracy. Such a system can be found in GB 2353448.

A better solution would deliver the benefits of simple selection of one of a number of an un-configured extended capability module for configuration whilst imposing fewer restraints on the tolerances of individual elements within the system and maintain compatibility with the LIN bus specification.

It is thus an object of the invention to provide an improved scheme for configuring modules that is compatible with the LIN BUS standard.

According to a first aspect of the present invention there is provided a reconfigurable module having means for being configured with an ID and also having embedded within it at the manufacturing stage a fixed unique Chip Identification Code (CIN) for use during a configuring operation.

Preferably, said module is a module compatible with the LIN Bus Standard. Preferably, said module has two LIN Bus interface pins connected by a series resistor. Preferably the series resistor is a 1 ohm or similar value resistor. In this manner the modules may be connected as a daisy chain of slave nodes on the LIN Bus.

Preferably said module further comprises a pull up resistor and a pull up current source for forcing a pull up current through the pull up resistor.

Preferably if a number of said modules are connected in a daisy chain manner standard LIN Bus arbitration rules apply for selecting one module from the daisy chain. Preferably said pull up current only flows whilst said module is selected.

Preferably said module further comprises a position counter, which may be incremented to indicate the position of the module in a daisy chain.

In an alternative embodiment said module further comprises a random code generator for generating a random code of a plurality of bits in length to identify the module as an alternative to the CIN code. The number of bits in the code is chosen to minimize the possibility of two modules having the same random code.

According to a second aspect of the present invention there is provided a LIN bus system comprising a plurality of modules linked to a LIN bus along which electronic data or instructions can be sent to and from each said module, at least one of said modules being non configured and having no unique identification address associated therewith, said at least one module having a unique code associated therewith, said system further including configuration means which interrogates said modules and detects the unique code of said at least one non-configured module and transmits a configuration signal to the module to configure the module, each said non configured module including counter means which is incremented each time a non configured is configured, said counter of each non-configured module, once configured, providing a unique code which is indicative of the position of the module in the system.

Preferably the at least one module having a unique code associated therewith is a reconfigurable module according to the first aspect of the invention and said unique code may be either a CIN or a randomly generated code or any other suitable unique code.

Preferably if such a LIN Bus system comprises a plurality of non-configured reconfigurable modules said non-configured reconfigurable modules are connected together in a daisy chain manner. Additionally and preferably a configuration sequence is performed to configure each of the plurality of non-configured reconfigurable modules. During a configuration sequence the bus master transmits a configuration request and all non-configured reconfigurable modules respond by transmitting a reply consisting of their unique code. Preferably, standard LIN bus arbitration rules apply, wherein active states win over recessive states, and one non-configured reconfigurable module will thus win the arbitration and become the 'selected module'.

Preferably the selected module then forces a current through its pull up resistor. Non-selected non-configured reconfigurable modules can monitor this current through their series resistors and thereby determine that a selected module is responding.

Preferably, each non-configured reconfigurable module incorporates a position counter incremented on each occasion that a selected module responds with a forced current. The position counter on a particular non-configured reconfigurable module is however not incremented when the particular non-configured reconfigurable module is itself selected. Additionally the position counter on a particular non-configured reconfigurable module is not incremented after the particular module has been selected. In this manner as each module in the daisy chain is selected in turn, each module has its position counter fixed showing its position in the daisy chain. Once all un-configured extended capability modules have been selected each will have a position counter showing a unique position for that module within the daisy chain. This unique position counter value can then be used to select a module and configure it for use in the system.

The benefits of such an improved system are that only one module is forcing current at a time thus simplifying the task of determining that a current is flowing by reducing the accuracy required for the measurement. The tolerances of the components are also less onerous.

According to a third aspect of the present invention there is provided a method of configuring a LIN Bus system according to the second aspect of the present invention comprising a plurality of said non-configured reconfigurable modules connected in a daisy chain manner comprising the steps of: transmitting a configuration request from a bus master; selecting one module from the daisy chain by standard LIN bus arbitration rules; forcing a current through the pull up resistor of the selected module; incrementing the position counter of each module within the daisy chain that is not currently or previously selected; repeating the above steps until each module in the daisy chain has been selected, the position counters for each module thus showing its unique position in the chain; and using the unique position counter value to select and configure a desired module or a plurality of desired modules.

In order that the invention be more clearly understood, one embodiment will now be described further herein and with reference to the accompanying drawings in which:-
- Figure 1: is a block diagram of a reconfigurable module according to the present invention showing its interface with a series resistance;
- Figure 2: shows a plurality of such reconfigurable modules connected to a common signal line; and
- Figure 3: illustrates how the position of each module within the daisy chain is determined.

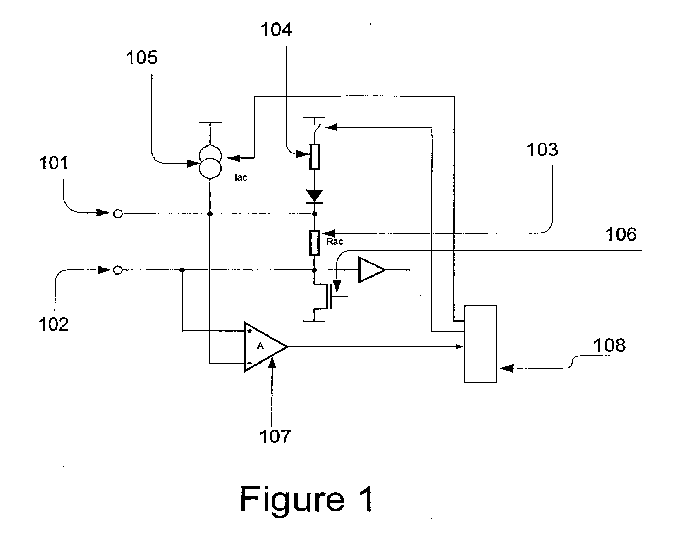

Referring now to figure 1 the module comprises a normal LIN bus interface pin spilt into a LIN_H pin, 101, and a LIN_L pin, 102, connected with a resistor Rac, 103, of typically 1 ohm. This enables modules to be connected as a daisy chain of slave nodes on the LIN bus. The module further comprises a pull up resistor 104 and a pull up current source Iac, 105, which can be activated during auto-configuration. During normal communication this current source is always off and has therefore no influence. This current source has a typical value of 8mA.

During the auto-configuration procedure the voltage across the resistor Rac is monitored by amplifier means, 107. The LIN pull up resistor, 104, can also be switched off during the auto-configuration process.

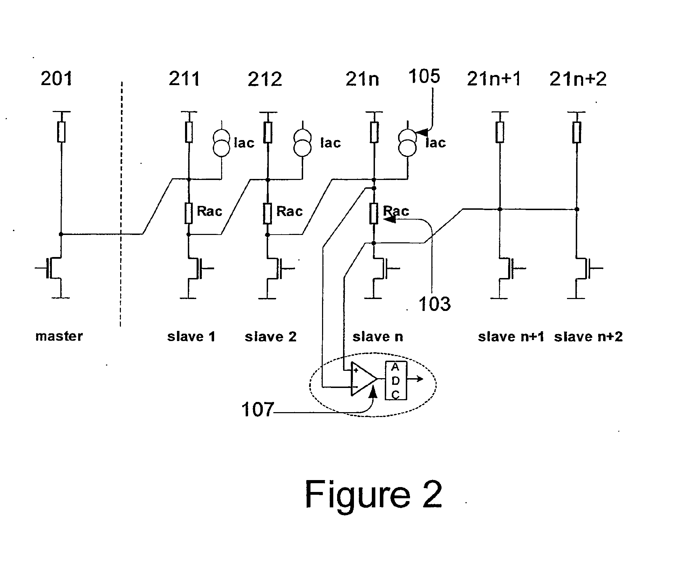

Figure 2 shows an example of a daisy-chained LIN bus for auto-configuration. The master module, 201, is located at one end of the bus. The modules 1 to n, 211, ..., 21n, are slave nodes with auto-configuration capability. The modules are daisy-chained by connecting the LIN_H pin, 101, on one module to the LIN_L pin, 102, on an adjacent module, in the case shown in figure 2, the module adjacent and to the right.

Modules n+1, ... are standard slave modules not reconfigurable modules according to the invention and as such they can be connected anywhere on the LIN bus. There may be any desired combination of reconfigurable slave modules and standard slaves connected to the bus, including slaves connected in a tree structure as long as the reconfigurable slave modules are connected in a daisy chain.

The reconfigurable modules can have following auto-configuration states:
- Unaddressed: the node is not identified (i.e. the node has not assigned an ID and can thus not be assessed for normal messages requiring the ID of a node).
- Selected: the node has been selected during the on-going auto-configuration interrogation message. It will switch to the addressed state at the end of the message.
- Addressed: the node has been addressed during the auto-configuration procedure. It is waiting the end of the auto-configuration procedure to get assigned his node ID.
- Identified: the node has received his proper ID (which is written in eeprom) and can be accessed for all application messages.

A module that has never been identified has ID=0 written in non-volatile memory NVM, such a module will enter the unaddressed state after power on/reset. Additionally, a module that is not in the identified state will enter the unaddressed state after power on/reset.

The module has a unique chip identification number (CIN) code built in at manufacture. This code can be any code, except a code consisting of all zeros. In practice this code consists of data defining batch No., wafer No and die position on the wafer. Typically the CIN has a total of 48 bits (6 bytes) of unique code.

No special hardware is required for the master. Any micro-processor equipped with a regular full duplex Uart, associated with a standard Lin physical interface circuit (such as the TH8082 available from Melexis) can be used. The software running on the master must be able to send the frame items (Uart bytes) in a different way than for the regular frames.

The auto-configuration system makes use of the user defied extended frame message (Id 0x3E). The advantages of this use of the extended frame message are that it leaves the regular LIN identifiers untouched and available, the number of bytes is free and can thus be optimized for each message, and the byte containing the error flag can be located at the end of the frame, after the checksum (to allow for signaling of checksum errors, by the master as well as the slaves).

The first byte of the extended frame message is sent by the master and identifies one of the configuration frames shown in the table below (the following bytes depend on the function).

| **Id** | **First Byte** | **Function** | **Following bytes** | **Last bytes** |
|---|---|---|---|---|
| **0x3E** | **1111 1111** | **UAD** | **2 data bytes** | **Checksum** |
| **0x3E** | **11111110** | **INT** | **CIN** | **Checksum & Flags** |
| **0x3E** | **11111101** | **IDS** | **ECU address byte** | **Checksum & Flags** |
| **0x3E** | **1111 1100** | **FRQ** | **various** | **Check sum** |
| **0x3E** | **1111 0---** | **Reserved for future use** | | |

Some aspects of the table are discussed in more detail below.

UAD: un-address all auto-configuration slaves, the UAD message is a regular message with data sent by the master. When the master initiates the UAD command all auto-configuration slaves reset their node identifier ID to 0 and set their internal position counter to 1. The result is that all salves are now in the unaddressed state and the bus is consequently ready to start the auto configuration process.

INT: interrogates all auto-configuration slaves, the INT message is an extended message containing 8 bytes of data. When the master initiates this command, it is processed by all auto configuration slaves who are in the unaddressed or addressed state. During the first 6 bytes (Data 0-5), all unaddressed slaves send their CIN code in an order defined by arbitration: if a slave detects a dominant level while trying to transmit a recessive level, it loses the arbitration and switches to a recessive level for the remaining of the CIN code transmission. During these bytes the master must send a data byte 0xFF (all recessive) to initiate the arbitration.

At the end of the CIN code transmission one slave only will have succeeded in transmitting its full CIN code and therefore recognizes itself as selected. This slave will transmit the checksum to result in a correct message for all standard slaves. This selected slave will switch to the addressed state at the end of the message (if the checksum transmission and the error flag are correct).

During the next byte (Data 6), the master sends 8 dominant bits, while all auto-configuration slaves switch off their LIN pull up resistor: - During the first bits all auto-configuration slaves in the unaddressed state will calibrate on the bus. This means that the voltage across the resistor Rac is amplified and measured by an ADC. This will be used as a reference voltage during the next 4 bits. During the second 4 bits the selected slave will enable its current source Iac and all addressed and unaddressed slaves will monitor the voltage drop across their resistor Rac. If the voltage threshold is exceeded (i.e. the chip detects a current Iac), the slave will increment its position counter.

During the last Byte (Data 7) all unaddressed slaves send a dominant bit followed by a recessive bit (the addressed slaves and the selected slave do nothing). The master also sends a 0xFFbyte to initiate the response from the slaves. This is the 'More' flag. It indicates that at least 1 slave is still in the unaddressed state. The remaining 6 bits can be used to signal an error flag (a slave disagreeing with the configuration sequence sends 1 dominant bit followed by 5 recessive bits).

The message is completed by the selected slave sending the checksum. In case no slave responds (CIN is fully recessive), the master must send the corresponding checksum to still have a correct message. At the end of the message the selected slave switches to the addressed state if no error has been flagged. If an error has been flagged the slave switches back to the unaddressed state.

The master repeats the interrogation message until all the reconfigurable slaves are in the addressed state i.e. until the 'More' flag is not returned. The master determines that this is completed correctly if: all checksums were correct; no 'all recessive CIN code' was received; no error flag was received; and the 'More' flag was transmitted correctly (for all messages but the last one.)

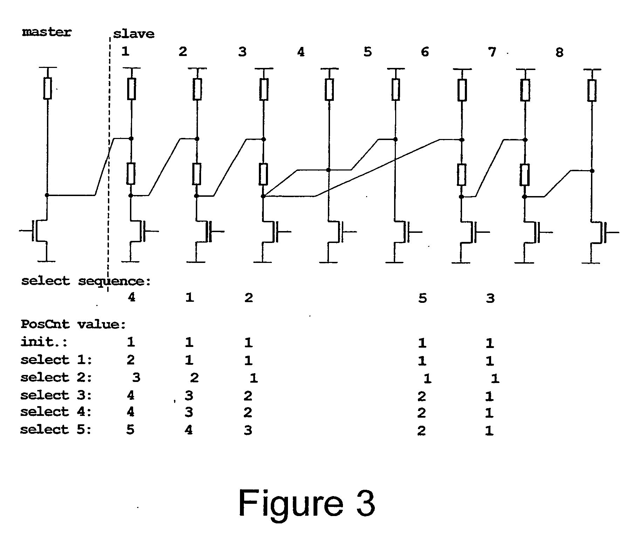

Figure 3 illustrates how the INT sequence works. The bus connects a master node with five reconfigurable slave nodes 1-3, 6, 7 and three standard slave nodes 4, 5, 8. Each of the reconfigurable slave nodes is selected in turn. In the example the order is 2, 3, 7, 1, 6. The nodes are selected in order of their CIN codes. The resulting values shown in each position counter after each cycle of the INT sequence is shown. When the configuration process is completed, the internal counter Position counter (PosCnt) of each slave contains its position in the daisy chain. This value, the ECU address, is be used to configure the modules to suit the application.

IDS: identifies an auto configuration slave, used to configure the node according to function on the bus, it transfers a module from the addressed state to the identified state. During this message the master accesses a slave according to the value stored in the position counter (the ECU address), to give the node an ID value which is typically stored in eeprom. In order that more than one identifier may be specified for each slave, a function code is used to select the identifier to be set.

FRQ: function request, allows interrogation of a slave based on its ECU address. It can be used after the INT sequence but before the IDS message to verify and or identify the function of the particular module.

In an alternative embodiment the CIN code (which is stored in eeprom) can also be replaced by a random generated code of x bits. In such embodiments, a random code generator is incorporated into the module. The right value for x is calculated to minimize the risk of different modules within the daisy chain having identical codes.

If however the situation should arise that two modules have identical codes, this can be overcome. If two slaves have identical codes, both will be selected simultaneously and they will both activate their current source. There are two alternatives by which this can be dealt with. Firstly, the selected slave closest to the master will detect a current flowing through its resistor and therefore will recognize that it is not the only slave selected and will consequently react as if not selected. Secondly and alternatively, an error flag can by generated either by the master or by the selected slave closest to the master which consequently restarts the procedure. The advantage of this embodiment is that there is no need for non volatile memory to be incorporated into the module and thus the configuration sequence can be run on each power on/reset.

It is of course to be understood that the invention is not intended to be restricted to the details of the above embodiments which is described by way of example only.

## Claims

1. A LIN bus system comprising a plurality of modules linked to a LIN bus along which electronic data or instructions can be sent to and from each said module, at least one of said modules being non configured and having no unique identification address associated therewith, said at least one module having a unique code associated therewith, said system further including configuration means which is adapted to interrogate said modules and detect the unique code of said at least one non-configured module and is adapted to transmit a configuration signal to the module to configure the module, each said non configured module including counter means which is incremented each time a non configured is configured, said counter of each non-configured module, once configured, providing a unique code which is indicative of the position of the module in the system.

2. A LIN bus system as claimed in claim 1 wherein the at least one module having a unique code associated therewith is a reconfigurable module having means for being configured with an ID and also having embedded within it at the manufacturing stage a fixed unique Chip Identification Code (CIN) for use during a configuring operation.

3. A LIN bus system as claimed in claim 2 wherein said reconfigurable module is a module compatible with the LIN bus Standard.

4. A LIN bus system as claimed in claim 3 wherein said reconfigurable module has two LIN Bus interface pins connected by a series resistor (103).

5. A LIN bus system as claimed in claim 4 wherein the series resistor is a 1 ohm resistor.

6. A LIN bus system as claimed in any preceding claim wherein said reconfigurable module further comprises a pull up resistor (104) and a pull up current source (105) for forcing a pull up current through the pull up resistor.

7. A LIN bus system as claimed in any one of claims 3 to 6 wherein if a number of said reconfigurable modules are connected in a daisy chain manner standard LIN Bus arbitration rules apply for selecting one module from the daisy chain.

8. A LIN bus system as claimed in claim 7 wherein said pull up current only flows whilst said module is selected.

9. A LIN bus system as claimed in any preceding claim wherein said reconfigurable module further comprises a position counter, which may be incremented to indicate the position of the module in a daisy chain.

10. A LIN bus system as claimed in any preceding claim wherein said reconfigurable module further comprises a random code generator for generating a random code of a plurality of bits in length to identify the module as an alternative to the CIN code.

11. A LIN bus system as claimed in any preceding claim wherein said unique code is a CIN.

12. A LIN bus system as claimed in anyone of claims 1 to 10 wherein said unique code is a randomly generated code.

13. A LIN bus system as claimed in any preceding claim wherein said LIN Bus system comprises a plurality of non-configured reconfigurable modules connected together in a daisy chain manner.

14. A LIN bus system as claimed in claim 13 wherein a configuration sequence is performed to configure each of the plurality of non-configured reconfigurable modules.

15. A LIN bus system as claimed in claim 14 wherein during a configuration sequence the bus master transmits a configuration request and all non-configured reconfigurable modules respond by transmitting a reply consisting of their unique code.

16. A LIN bus system as claimed in claim 15 wherein standard LIN bus arbitration rules apply, wherein active states win over recessive states, and one non-configured reconfigurable module will thus win the arbitration and become the 'selected module'.

17. A LIN bus system as claimed in claim 16 wherein the selected module then forces a current through its pull up resistor (104).

18. A LIN bus system as claimed in claim 17 wherein non-selected non-configured reconfigurable modules can monitor this current through their series resistors and thereby determine that a selected module is responding.

19. A LIN bus system as claimed in any preceding claim wherein each non-configured reconfigurable module incorporates a position counter incremented on each occasion that a selected module responds with a forced current.

20. A LIN bus system as claimed in claim 19 wherein the position counter on a particular non-configured reconfigurable module is not incremented when the particular non-configured reconfigurable module is itself selected

21. A LIN bus system as claimed in claim 20 wherein the position counter on a particular non-configured reconfigurable module is not incremented after the particular module has been selected.

22. A LIN bus system as claimed in claim 21 wherein once all un-configured extended capability modules have been selected each will have a position counter showing a unique position for that module within the daisy chain and this unique position counter value can then be used to select a module and configure it for use in the system.

23. A method of configuring a LIN Bus system comprising a plurality of said non-configured reconfigurable modules connected in a daisy chain manner comprising the steps of: transmitting a configuration request from a bus master; selecting one module from the daisy chain by standard LIN bus arbitration rules; forcing a current through the pull up resistor (104) of the selected module; incrementing the position counter of each module within the daisy chain that is not currently or previously selected; repeating the above steps until each module in the daisy chain has been selected, the position counters for each module thus showing its unique position in the chain; and using the unique position counter value to select and configure a desired module or a plurality of desired modules.

24. The method of claim 23 wherein the LIN bus system is a LIN bus system as claimed in anyone of claims 1 to 22.

## Patentansprüche

1. LIN-Bus-System mit einer Mehrzahl von Modulen, welche an ein Lin-Bus angeschlossen sind, entlang welchem elektronische Daten oder Befehle zu jedem der genannten Module und von diesen gesendet werden können, wobei wenigstens eines der genannten Module nicht konfiguriert ist und diesem keine einmalige Identifikationsadresse zugeordnet hat, wobei das wenigstens eine Modul einen einmaligen Code zugeordnet hat, wobei das System weiterhin eine Konfigurationseinrichtung einschließt, welche geeignet ist, die genannten Module abzufragen und den einmaligen Code des wenigstens einen nicht konfigurierten Moduls festzustellen und ein Konfigurationssignal zu dem Modul zu übertragen, um das Modul zu konfigurieren, wobei jedes genannte nicht konfigurierte Modul eine Zählereinrichtung einschließt, welche jedes Mal, wenn ein nicht konfiguriertes Modul konfiguriert wird, inkrementiert wird, wobei der genannte Zähler jedes nicht konfigurierten Moduls, wenn es einmal konfiguriert ist, einen einmaligen Code bereitstellt, welcher auf die Position des Moduls in dem System schließen lässt.

2. LIN-Bus-System nach Anspruch 1, in welchem das wenigstens eine Modul, dem ein einmaliger Code zugeordnet ist, ein rekonfigurierbares Modul ist, welches eine Einrichtung aufweist, um mit einem ID konfiguriert zu werden, und auch in ihm in der Herstellungsstufe einen festliegenden einmaligen Chip Identification Code (CIN) zur Benutzung während eines Konfigurierbetriebes eingebettet hat.

3. LIN-Bus-System nach Anspruch 2, in welchem das rekonfigurierbare Modul ein Modul ist, welches mit dem LIN-Bus-Standard kompatibel ist.

4. LIN-Bus-System nach Anspruch 3, in welchem das rekonfigurierbare Modul zwei LIN-Bus-Interface-Stifte über einen Reihenwiderstand (103) angeschlossen enthält.

5. LIN-Bus-System nach Anspruch 4, in welchem der Reihenwiderstand ein 1 Ohm-Widerstand ist.

6. LIN-Bus-System nach einem der vorhergehenden Ansprüche, in welchem das genannte rekonfigurierbare Modul weiterhin einen pull-up-Widerstand (104) und eine pull-up-Stromquelle (105) aufweist, um einen pull-up-Strom durch den pull-up-Widerstand zu ziehen.

7. LIN-Bus-System nach einem der Ansprüche 3 bis 6, in welchem, wenn eine Anzahl der genannten rekonfigurierbaren Module in einer Reihenverkettung (daisy chain) verbunden ist, Standard-LIN-Bus-Arbitration-Regeln zum Auswählen eines Moduls aus der Reihenverkettung Anwendung finden.

8. LIN-Bus-System nach Anspruch 7, in welchem der genannte pull-up-Strom nur fließt, während das genannte Modul ausgewählt ist.

9. LIN-Bus-System nach einem der vorhergehenden Ansprüche, in welchem das genannte rekonfigurierbare Modul weiterhin einen Positionszähler enthält, welcher inkrementiert werden kann, um die Position des Moduls in einer Verkettung anzuzeigen.

10. LIN-Bus-System nach einem der vorhergehenden Ansprüche, in welchem das rekonfigurierbare Modul weiterhin einen Zufallscodegenerator enthält, um einen Zufallscode einer Mehrzahl von bits in der Länge zu erzeugen, um das Modul als eine Alternative zu dem CIN-Code zu identifizieren.

11. LIN-Bus-System nach einem der vorhergehenden Ansprüche, in welchem der genannte einmalige Code ein CIN ist.

12. LIN-Bus-System nach einem der Ansprüche 1 bis 10, in welchem der genannte einmalige Code ein zufallserzeugter Code ist.

13. LIN-Bus-System nach einem der vorhergehenden Ansprüche, in welchem das genannte LIN-Bus-System eine Mehrzahl von nicht konfigurierten rekonfigurierbaren Modulen aufweist, welche in einer Reihenkette (daisy chain) miteinander verbunden sind.

14. LIN-Bus-System nach Anspruch 13, in welchem eine Konfigurationssequenz ausgeführt wird, um jedes der Mehrzahl von nicht konfigurierten rekonfigurierbaren Modulen zu konfigurieren.

15. LIN-Bus-System nach Anspruch 14, in welchem während eine Konfigurationssequenz der Bus-Master eine Konfigurationsanfrage übermittelt und alle nicht konfigurierten rekonfigurierbaren Module antworten, indem sie eine Antwort übermitteln, welche aus ihrem einmaligen Code besteht.

16. LIN-Bus-System nach Anspruch 15, in welchem Standard-LIN-Bus-Arbitration-Regeln Anwendung finden, wobei aktive Zustände gegenüber rezessiven Zuständen gewinnen, und ein nicht konfiguriertes rekonfigurierbares Modul so die Arbitration gewinnt und das "ausgewählt Modul" wird.

17. LIN-Bus-System nach Anspruch 16, in welchem das ausgewählte Modul dann einen Strom durch seinen pull-up-Widerstand (104) erzwingt.

18. LIN-Bus-System nach Anspruch 17, in welchem nicht ausgewählte nicht konfigurierte rekonfigurierbare Module diesen Strom **durch** ihre Reihenwiderstände beobachten und **dadurch** bestimmen können, dass ein ausgewähltes Modul antwortet.

19. LIN-Bus-System nach einem der vorhergehenden Ansprüche, in welchem jedes nicht konfigurierte rekonfigurierbare Modul einen Positionszähler aufweist, welcher bei jeder Gelegenheit, in der ein ausgewähltes Modul mit einem erzwungenen Strom antwortet, inkrementiert wird.

20. LIN-Bus-System nach Anspruch 19, in welchem der Positionszähler auf einen bestimmten nicht konfigurierten rekonfigurierbaren Modul nicht inkrementiert wird, wenn das bestimmte nicht konfigurierte rekonfigurierbare Modul selbst ausgewählt ist.

21. LIN-Bus-System nach Anspruch 20, in welchem der Positionszähler bei einem bestimmten nicht konfigurierten rekonfigurierbaren Modul nicht inkriminiert wird, nachdem das bestimmte Modul ausgewählt worden ist.

22. LIN-Bus-System nach Anspruch 21, in welchem, wenn einmal alle nicht konfigurierten Module mit erweiterter Fähigkeit ausgewählt worden sind, jedes einen Positionszähler hat, welcher eine einmalige Position für dieses Modul innerhalb der Verkettung zeigt und dieser Zählerwert für die einmalige Position dann benutzt werden kann, um ein Modul auszuwählen, und es für die Benutzung in dem System zu konfigurieren.

23. Verfahren zum Modulkonfigurieren eines LIN-Bus-Systems mit einer Vielzahl der genannten nicht konfigurierten rekonfigurierbaren Module, welche in einer Verkettung (daisy chain) miteinander verbunden sind, mit den Schritten: Übertragen einer Konfigurationsanfrage von einem Bus-Master; Auswählen eines einzigen Moduls aus der Verkettung durch Standard-LIN-Bus-Arbitration-Regeln; Erzwingen eines Stromes durch den pull-up-Widerstand (104) des ausgewählten Moduls; Inkrementieren des Positionszählers jedes Moduls innerhalb der Verkettung, welcher nicht gegenwärtig oder vorher ausgewählt worden ist; Widerholen der zuvor genannten Schritte bis jedes Modul in der Verkettung ausgewählt worden ist, wobei die Positionszähler jedes Moduls somit ihre einmalige Position in der Kette zeigen; und Benutzen des Zählerwertes für die einmalige Position, um ein gewünschtes Modul oder eine Mehrzahl von erwünschten Modulen auszuwählen und zu konfigurieren.

24. Verfahren nach Anspruch 23, bei welchem das LIN-Bus-System ein LIN-Bus-System nach einem der Ansprüche 1 bis 22 ist.

## Revendications

1. Système de bus de réseau LIN comprenant une pluralité de modules reliés à un bus de réseau LIN le long duquel des données ou des instructions électroniques peuvent être envoyées vers et depuis chaque dit module, au moins l'un desdits modules n'étant pas configurés et ne comportant pas d'adresse d'identification unique associée à celui-ci, ledit au moins un module ayant un code unique associé à celui-ci, ledit système comprenant en outre un moyen de configuration qui est conçu pour interroger lesdits modules et détecter le code unique dudit au moins un module non configuré et est conçu pour transmettre un signal de configuration au module afin de configurer le module, chaque dit module non configuré comprenant un moyen de compteur qui est incrémenté à chaque fois qu'un module non configuré est configuré, ledit compteur de chaque module non configuré, une fois configuré, procurant un code unique qui est indicatif de la position du module dans le système.

2. Système de bus de réseau LIN selon la revendication 1, dans lequel le au moins un module comportant un code unique qui lui est associé est un module reconfigurable comportant un moyen pour être configuré avec un identificateur (ID) et comportant également, incorporé dans celui-ci au stade de fabrication, un code d'identification de boîtier unique (CIN) fixé à utiliser durant une opération de configuration.

3. Système de bus de réseau LIN selon la revendication 2, dans lequel ledit module reconfigurable est un module compatible avec le standard du bus de réseau LIN.

4. Système de bus de réseau LIN selon la revendication 3, dans lequel ledit module reconfigurable comporte deux broches d'interface de bus de réseau LIN reliées par une résistance série (103).

5. Système de bus de réseau LIN selon la revendication 4, dans lequel la résistance série est une résistance de 1 ohm.

6. Système de bus de réseau LIN selon l'une quelconque des revendications précédentes, dans lequel ledit module reconfigurable comprend en outre une résistance d'excursion haute (104) et une source de courant d'excursion haute (105) destinée à forcer un courant d'excursion haute au travers de la résistance d'excursion haute.

7. Système de bus de réseau LIN selon l'une quelconque des revendications 3 à 6, dans lequel, si un certain nombre desdits modules reconfigurables sont reliés en une chaîne d'éléments, des règles d'arbitrage de bus de réseau LIN standards s'appliquent pour sélectionner un module à partir de la chaîne d'éléments.

8. Système de bus de réseau LIN selon la revendication 7, dans lequel ledit courant d'excursion haute circule uniquement pendant que ledit module est sélectionné.

9. Système de bus de réseau LIN selon l'une quelconque des revendications précédentes, dans lequel ledit module reconfigurable comprend en outre un compteur de position, lequel peut être incrémenté pour indiquer la position du module dans une chaîne d'éléments.

10. Système de bus de réseau LIN selon l'une quelconque des revendications précédentes, dans lequel ledit module reconfigurable comprend en outre un générateur de code aléatoire destiné à générer un code aléatoire d'une longueur d'une pluralité de bits pour identifier le module, en tant qu'alternative au code CIN.

11. Système de bus de réseau LIN selon l'une quelconque des revendications précédentes, dans lequel ledit code unique est un code CIN.

12. Système de bus de réseau LIN selon l'une quelconque des revendications 1 à 10, dans lequel ledit code unique est un code généré de façon aléatoire.

13. Système de bus de réseau LIN selon l'une quelconque des revendications précédentes, dans lequel ledit système de bus de réseau LIN comprend une pluralité de modules reconfigurables non configurés reliés ensemble à la manière d'une chaîne d'éléments.

14. Système de bus de réseau LIN selon la revendication 13, dans lequel une séquence de configuration est exécutée pour configurer chaque module de la pluralité de modules reconfigurables non configurés.

15. Système de bus de réseau LIN selon la revendication 14, dans lequel, pendant une séquence de configuration, le maître bus transmet une demande de configuration et tous les modules reconfigurables non configurés répondent en transmettant une réponse constituée de leur code unique.

16. Système de bus de réseau LIN selon la revendication 15, dans lequel les règles d'arbitrage de bus de réseau LIN standards s'appliquent où des états actifs prennent le pas sur des états récessifs, et un module reconfigurable non configuré gagnera donc l'arbitrage et deviendra le "module sélectionné".

17. Système de bus de réseau LIN selon la revendication 16, dans lequel le module sélectionné force alors un courant au travers de sa résistance d'excursion haute (104).

18. Système de bus de réseau LIN selon la revendication 17, dans lequel des modules reconfigurables non configurés non sélectionnés peuvent surveiller ce courant au travers de leurs résistances série et déterminer ainsi qu'un module sélectionné est en train de répondre.

19. Système de bus de réseau LIN selon l'une quelconque des revendications précédentes, dans lequel chaque module reconfigurable non configuré incorpore un compteur de position incrémenté à chaque occasion où un module sélectionné répond avec un courant forcé.

20. Système de bus de réseau LIN selon la revendication 19, dans lequel le compteur de position sur un module reconfigurable non configuré particulier n'est pas incrémenté lorsque le module reconfigurable non configuré particulier est lui-même sélectionné.

21. Système de bus de réseau LIN selon la revendication 20, dans lequel le compteur de position sur un module reconfigurable non configuré particulier n'est pas incrémenté après que le module particulier a été sélectionné.

22. Système de bus de réseau LIN selon la revendication 21, dans lequel une fois que la totalité des modules à capacité étendue non configurés ont été sélectionnés, chacun aura un compteur de position indiquant une position unique pour ce module à l'intérieur de la chaîne d'éléments et cette valeur de compteur de position unique peut alors être utilisée pour sélectionner un module et le configurer en vue d'une utilisation dans le système.

23. Procédé consistant à configurer le système de bus de réseau LIN comprenant une pluralité desdits modules reconfigurables non configurés reliés en une chaîne d'éléments comprenant les étapes consistant à : transmettre une demande de configuration depuis un maître de bus, sélectionner un module à partir de la chaîne d'éléments par des règles d'arbitrage de bus de réseau LIN standards, forcer un courant au travers de la résistance d'excursion haute (104) du module sélectionné, incrémenter le compteur de position de chaque module à l'intérieur de la chaîne d'éléments qui n'est pas actuellement ou n'a pas été précédemment sélectionné, répéter les étapes ci-dessus jusqu'à ce que chaque module de la chaîne d'éléments ait été sélectionné, les compteurs de position pour chaque module indiquant ainsi sa position unique dans la chaîne et utiliser la valeur du compteur de position unique pour sélectionner et configurer un module désiré ou une pluralité de modules désirés.

24. Procédé selon la revendication 23, dans lequel le système de bus de réseau LIN est un système de bus de réseau LIN selon l'une quelconque des revendications 1 à 22.
